# EUROPEAN PATENT SPECIFICATION

(11) **EP 3 574 682 B1**
(45) Date of publication and mention of the grant of the patent: **29.07.2020**
(21) Application number: 17719828.0
(22) Date of filing: 19.04.2017
(51) Int. Cl.: H04W 48/02

(54) **ACCESS BARRING TECHNIQUES IN A CONNECTED MODE**
ZUGANGSBERECHTIGUNGSTECHNIKEN IN EINEM VERBUNDENEN MODUS
TECHNIQUES D'INTERDICTION D'ACCÈS DANS UN MODE CONNECTÉ

(30) Priority: 27.01.2017 US 201762451148 P
(43) Date of publication of application: 04.12.2019
(73) Proprietor: Telefonaktiebolaget LM Ericsson (Publ), 164 83 Stockholm (SE)
(72) Inventor: HÖGLUND, Andreas, 170 62 Solna (SE); WÄNSTEDT, Stefan, 972 51 Luleå (SE); YAVUZ, Emre, 117 50 Stockholm (SE); SUSITAIVAL, Riikka, 00100 Helsinki (FI)
(74) Representative: Ericsson
(86) International application number: PCT/EP2017/059277
(87) International publication number: WO 2018/137786

(56) References cited:
- EP-A1- 2 205 026
- GB-A- 2 481 213
- GB-A- 2 518 625
- US-A1- 2013 194 998
- HUAWEI ET AL: "Possible solutions for congestion mitigation in RRC_CONNECTED", 3GPP DRAFT; R2-133284 POSSIBLE SOLUTIONS FOR CONGESTION MITIGATION IN RRC_CONNECTED, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Ljubljana, Slovenia; 20131007 - 20131011 27 September 2013 (2013-09-27), XP050718972, Retrieved from the Internet: URL:http://www.3gpp.org/ftp/tsg_ran/WG2_RL 2/TSGR2_83bis/Docs/ [retrieved on 2013-09-27]

## Description

### Technical Field

The present disclosure generally relates to a technique for barring access to a radio access network (RAN). More specifically, methods and devices are provided for barring access of a station that is in a radio resource control (RRC) connected mode relative to the RAN.

### Background

Access barring is a mechanism to stop access attempts used by wireless networks at congestion. If the load on the RAN or a base station of the RAN is too high, the number of served stations will fall below the actual radio capacity and the RAN is congested. The solution is to reduce the load somewhat by the use of access barring, such that the RAN can serve the maximum number of stations per time unit that it is capable of. Even though some stations will have to wait and re-attempt at a later point, this will lead to the shortest time to serve stations in average.

In a RAN implementing 3GPP Long Term Evolution (LTE), i.e. evolved UMTS Terrestrial Radio Access (E-UTRAN) serving user equipments (UEs) as the stations, access barring is applicable to UEs in the RRC idle mode. There are many different mechanisms for LTE, including access class barring (ACB) according to 3GPP Release 8, and enhanced access barring (EAB) according to 3GPP Release 11. The ACB mechanism is probability-based, wherein a UE draws a random number in the interval [0, 1] and is only allowed to access if this number is below a certain threshold, "ac-BarringFactor". If access is barred, the UE can only re-attempt at first after a certain barring time. The EAB mechanism is an addition to the ACB mechanism, which is targeting massive amounts of machine-type devices. The EAB mechanism is based on a barring bitmap. If access is allowed according to the bit in the bitmap corresponding to the access class of the UE, the UE can access. If it is not, the UE can re-attempt at any later point and check the bitmap again. For EAB-enabled UEs, the ACB check must also be performed before access.

Access barring is especially important in the case of machine-type communication (MTC), or machine-to-machine communication (M2M), wherein the number of devices (generically referred to as stations herein) is predicted to become many times larger than the number of human subscribers. In 3GPP, radio access technologies specified for this purpose include LTE MTC (also referred to as eMTC or Cat-M1), narrowband Internet-of-Things (NB-IoT) and enhanced coverage GSM (EC-GSM).

eMTC is standardized in 3GPP Release 13 to support coverage enhancements (CE) of up to 15 dB. This is achieved by time repetition in a Transmission Time Interval (TTI) bundling manner, similar to that introduced for VoIP in 3GPP Release 8. In 3GPP Release 8, TTI bundling is limited to the uplink shared data channel and fixed to 4 repetitions. For 3GPP Release 13, MTC UEs requiring coverage enhancements, the number of repetitions is up to several hundreds and can be configured per cell or per UE, and will also be applied to the downlink. For random access (RA), it has been agreed in 3GPP to have 4 different CE-levels, i.e. 4 different physical RA channel (PRACH) configurations with different repetition levels. For dedicated transmissions in the RRC connected mode, the repetition level is defined by the RAN. Further, the UE should not report any change in their CE level, since this would generate a lot of unnecessary signaling. eMTC is reusing the access barring solution from LTE (ACB and EAB).

In 3GPP Release 12, a lower complexity (LC) UE category (also referred to as Cat-0) was introduced to support lower manufacturing costs for MTC devices. In 3GPP Release 13 further complexity reductions are being introduced, wherein the largest change is a reduced device bandwidth to 6 PRBs or 1.4 MHz, which is an example of NB devices. This means that some legacy channels like the downlink control channel (PDCCH), which spans over the entire system bandwidth, cannot be received. For these low complexity UEs or NB devices, PDCCH is replaced with an updated version of EPDCCH transmitted only within 6 Physical Resource Blocks (PRBs), which is also referred to as M-PDCCH. The lower complexity of the devices means that a small number of repetitions might be needed also for these devices in normal coverage, e.g., to counteract losses from using only one receiving antenna (e.g., according to 3GPP Release 12), loss of frequency diversity (e.g., according to 3GPP Release 13), etc. Further, due to the extended transmission time from repetition, cross-subframe scheduling may be applied. That is, a transmission is first scheduled by repetitions on E-PDCCH and then the repetitions of the actual data transmission are carried out after the final transmission of the E-PDCCH.

NB-loT is a narrowband system developed for cellular internet of things by 3GPP in Release 13. The system is based on existing LTE systems and addresses optimized network architecture and improved indoor coverage for massive number of devices, e.g., with characteristics including low throughput devices (e.g. 2 kbps), low delay sensitivity (about 10 seconds), ultra-low device cost (below 5 dollars) and/or low device power consumption (e.g., for a battery life of about 10 years).

It is envisioned that each cell (e.g., with a coverage are of about 1 square km) in the NB-loT system serves thousands (e.g., about 50 thousand) devices such as sensors, meters, actuators, and alike. In order to be able to make use of existing spectrum for, e.g. GSM, a fairly narrow bandwidth (e.g., 180 KHz bandwidth, same as one PRB in LTE) has been adopted for the NB-loT system. The entire NB-loT system is contained within 200 kHz or one PRB, i.e. 12 subcarriers of 15 kHz each, which may be referred to as one NB-loT carrier.

For a frequency division duplex (FDD) mode of the NB-loT system (i.e., the transmitter and the receiver operate at different carrier frequencies), only half-duplex mode needs to be supported in the UE. In order to achieve improved coverage, data repetition is used both in uplink (UL) and/or downlink (DL). The lower complexity of the devices (e.g., only one chain for transmission and receiver) means that some repetition might be needed also in normal coverage. Further, to alleviate UE complexity, cross-subframe scheduling may be applied. That is, a transmission is first scheduled on a Narrowband Physical DL Control Channel (NPDCCH) and then the first transmission of the actual data on the Narrowband Physical DL Shared Channel (NPDSCH) is carried out after the final transmission of the NPDCCH. Similarly, for UL data transmission, information about resources scheduled by the RAN and needed by the UE for UL transmission is first conveyed on the NPDCCH and then the first transmission of the actual data by the UE on the Narrowband Physical UL Shared Channel (NPUSCH) is carried out after the final transmission of the NPDCCH. In other words, for both cases above, there is no simultaneous reception of control channel and reception or transmission of data channel from the perspective of the UE. For NB-loT devices, there is only one existing access barring mechanism, which is based on a barring bitmap (similar to EAB).

The existing access barring mechanisms do not apply to UEs in RRC connected mode. For example, the ACB check according to Section 5.3.3.11 (on "Access barring check") in the 3GPP technical specification 36.331 V14.1.0 is only applied when the UE attempts to establish a RRC Connection. The EAB check according to Section 5.3.3.12 (on "EAB check" in the 3GPP technical specification 36.331 V14.1.0 is only applied when the UE attempts to establish a RRC connection subject to EAB. The NB-loT access barring check according to Section 5.3.3.14 (on "Access Barring check for NB-IoT") in the 3GPP technical specification 36.331 V14.1.0 is only applied when the UE attempts to establish a RRC Connection. This means that in legacy there is no access barring for UEs in RRC Connected Mode.

GB 2 518 625 A discloses a method of easing congestion in a mobile radio communications network including the step of applying access restriction (or attempting communication) at a mobile radio communications user device towards the network and on the basis of bearer characteristics such as new or ongoing bearer, bearer quality of service (QoS), bearer type and or bearer class, and the access restrictions being controlled by the network e.g. the Radio Access Network such as via an eNodeB or the Core Network.

3GPP Draft R2-133284 "Possible solutions for congestion migration in RRC_CONNECTED" discusses how to improve the current congestion mitigation mechanism for both idle UEs and connected UEs. One solution (Solution II) is the Extended ACB solution in which the UEs in RRC connected mode should do ACB and EAB checking before triggering or transmitting RA/SR.

GB 2 481 213 A discloses a network element for supporting communication within at least one cell of a communication network which identifies when a first cell supported by the network element is in a capacity state and, in response thereto, indicates the first cell as being in a restricted access state, e.g. cell barred or cell reserved, within system information broadcast (SIB) within the first cell and valid for wireless communication units in a connected mode state. Upon receipt of a connection request message from a wireless communication unit within the first cell, the network element determines whether the first cell is in a capacity state, and, in response thereto, causes the wireless communication unit from which the connection request message was received to enter a connected mode state, e.g. Cell_FACH.

With the introduction of eDRX for the RRC connected mode in 3GPP Release 13, UEs can be configured with DRX cycle lengths of up to 10.2 s for eMTC and 9.2 s for NB-loT. Therefore, the UE can remain for longer in the RRC connected mode, and accordingly, there will be larger numbers of UEs in the RRC connected mode with the RAN. Since existing access barring (e.g., in 3GPP Release 14 and prior Releases) only applies to the RRC idle mode, the RAN has no means to control the number of accesses from station once the station has entered the RRC connected mode.

### Summary

Accordingly, there is a need for an access barring technique that reduces or prevents network congestion in RRC connected mode.

As to one aspect, that is a subject of the claimed invention, a method of barring access of a station in a radio resource control (RRC) connected mode to a radio access network (RAN) is provided according to claim 1.

As to another aspect, that is not a subject of the claimed invention, a method of barring access of a station in an RRC connected mode to a RAN is provided. The method comprises or initiates a step of receiving configuration information from the RAN. The configuration information is indicative of whether the access barring in the RRC connected mode is omitted, performed according to access barring parameters dedicated to the RRC connected mode or performed according to access barring parameters applied in an RRC idle mode of the station. Further, the method comprises or initiates a step of conditionally performing access barring in the RRC connected mode depending on the configuration information.

"Conditionally" performing the access barring may be based on a condition that depends on the configuration information.

Moreover, the one aspect and the other aspect are combinable. For example, the condition depending on the configuration information may include the expiry of at least one of the one or more timers.

As to a further aspect, that is not a subject of the claimed invention, a method of barring access of a station in an RRC connected mode to a RAN is provided. The method comprises or initiates a step of establishing the RRC connected mode with the RAN. Further, the method comprises or initiates a step of conditionally performing access barring in the RRC connected mode depending on predefined configuration information. The predefined configuration information is indicative of whether the access barring in the RRC connected mode is omitted, performed according to access barring parameters dedicated to the RRC connected mode or performed according to access barring parameters applied in an RRC idle mode of the station.

"Conditionally" performing the access barring may be based on a condition that depends on the predefined configuration information.

Moreover, the one aspect and/or the other aspect are combinable with the further aspect. For example, the condition depending on the predefined configuration information may include the expiry of at least one of the one or more timers. Alternatively or in addition, any of the aspects may comprise or initiate a step of establishing the RRC connected mode with the RAN.

At least one or each step of the above method aspects may be performed by or at the station.

According to a still further aspect, that is not a subject of the claimed invention, a control signal is provided. The control signal may be provided in control plane signaling of the RAN. The control signal is encoded with control information. The control information causes a station receiving the control signal to perform any one of the steps of the above method aspects. For example, the control information may configure the station to establish an RRC connected mode with the RAN. Alternatively or in addition, the control information may configure the station to conditionally perform access barring in the RRC connected mode. A condition for conditionally performing the access barring may depend on the configuration information. For example, the configuration information may be indicative of whether the access barring in the RRC connected mode is omitted, performed according to access barring parameters dedicated to the RRC connected mode or performed according to access barring parameters applied in an RRC idle mode of the station.

As to a still further aspect, that is not a subject of the claimed invention, a method of barring access of a station in an RRC connected mode to a RAN is provided. The method comprises or initiates a step of establishing the RRC connected mode with the station. Further, the method comprises or initiates a step of sending configuration information to the station. The configuration information is indicative of whether the access barring in the RRC connected mode is omitted, performed according to access barring parameters dedicated to the RRC connected mode or performed according to access barring parameters applied in an RRC idle mode of the station. The configuration information may be broadcasted or sent in a dedicated message to the station. At least one or each step of the method may be performed by the RAN, e.g., a node or base station of the RAN.

Any one of the above method aspects may (at least partly) be implemented in at least one of a medium access control (MAC) layer, a radio link control (RLC) layer, a packet data convergence protocol (PDCP) layer and an RRC layer of a protocol stack of the RAN and/or the station.

As to another aspect, a computer program product is provided according to claim 13. The computer program product may be stored on a computer-readable recording medium. The computer program product may also be provided for download via a data network, e.g., the RAN and/or the Internet. Alternatively or in addition, any one of the method aspects may, at least partly, be encoded in a Field-Programmable Gate Array (FPGA) and/or an Application-Specific Integrated Circuit (ASIC), or the functionality may be provided for download by means of a hardware description language.

As to one device aspect, a device for barring access of a station in an RRC connected mode to a RAN is provided according to claim 15.

As to a still further device aspect, that is not a subject of the claimed invention, a device for barring access of a station in an RRC connected mode to a RAN is provided. The device may be configured to perform or initiate the steps of the other method aspect. Alternatively or in addition, the device comprises a receiving unit configured to receive configuration information from the RAN. The configuration information is indicative of whether the access barring in the RRC connected mode is omitted, performed according to access barring parameters dedicated to the RRC connected mode or performed according to access barring parameters applied in an RRC idle mode of the station. Further, the device comprises an access barring unit configured to conditionally perform access barring in the RRC connected mode depending on the configuration information.

As to a still further device aspect, that is not a subject of the claimed invention, a device for barring access of a station in an RRC connected mode to a RAN is provided. The device comprises a processor and a memory, said memory containing instructions executable by said processor whereby the device is operative to receive configuration information from the RAN. The configuration information is indicative of whether the access barring in the RRC connected mode is omitted, performed according to access barring parameters dedicated to the RRC connected mode or performed according to access barring parameters applied in an RRC idle mode of the station. Further, the device is operative to conditionally perform access barring in the RRC connected mode depending on the configuration information.

As to a still further device aspect, that is not a subject of the claimed invention, a device for barring access of a station in an RRC connected mode to a RAN is provided. The device comprises a configuration module for receiving configuration information from the RAN. The configuration information is indicative of whether the access barring in the RRC connected mode is omitted, performed according to access barring parameters dedicated to the RRC connected mode or performed according to access barring parameters applied in an RRC idle mode of the station. Further, the device comprises an access barring module for conditionally performing access barring in the RRC connected mode depending on the configuration information.

As to a still further device aspect, that is not a subject of the claimed invention, a device for barring access of a station in an RRC connected mode to a RAN is provided. The device may be configured to perform or initiate the steps of the further method aspect. Alternatively or in addition, the device comprises an establishing unit configured to establish the RRC connected mode with the RAN. Further, the device comprises an access barring unit configured to conditionally perform access barring in the RRC connected mode depending on predefined configuration information indicative of whether the access barring in the RRC connected mode is omitted, performed according to access barring parameters dedicated to the RRC connected mode or performed according to access barring parameters applied in an RRC idle mode of the station.

As to a still further device aspect, that is not a subject of the claimed invention, a device for barring access of a station in an RRC connected mode to a RAN is provided. The device comprises a processor and a memory, said memory containing instructions executable by said processor whereby the device is operative to establish the RRC connected mode with the RAN. Further, the device is operative to conditionally perform access barring in the RRC connected mode depending on predefined configuration information indicative of whether the access barring in the RRC connected mode is omitted, performed according to access barring parameters dedicated to the RRC connected mode or performed according to access barring parameters applied in an RRC idle mode of the station.

As to a still further device aspect, that is not a subject of the claimed invention, a device for barring access of a station in an RRC connected mode to a RAN is provided. The device comprises a connectivity module for establishing the RRC connected mode with the RAN. Further, the device comprises an access barring module for conditionally performing access barring in the RRC connected mode depending on predefined configuration information indicative of whether the access barring in the RRC connected mode is omitted, performed according to access barring parameters dedicated to the RRC connected mode or performed according to access barring parameters applied in an RRC idle mode of the station.

Any one of the above device aspects may be implemented in or at the station. The devices and/or the station may further include any feature disclosed in the context of the method aspects. Particularly, any one of the units and modules, or a dedicated unit or module, may be configured to perform or initiate one or more of the steps of any one of the method aspects.

### Brief Description of the Drawings

Further details of embodiments of the technique are described with reference to the enclosed drawings, wherein:
- Fig. 1: shows a schematic block diagram of a device embodiment for barring access of a station to a radio access network;
- Fig. 2: shows a flowchart for a method embodiment for barring access of a station to a radio access network, which is implementable by the device of Fig. 1;
- Fig. 3: shows a schematic block diagram of the device of Fig. 1 according to a first embodiment;
- Fig. 4: shows a schematic block diagram of the device of Fig. 1 according to a second embodiment;
- Fig. 5: shows a schematic block diagram of the device of Fig. 1 according to a third embodiment;
- Fig. 6: shows a flowchart of the method of Fig. 2 according to the first embodiment;
- Fig. 7: shows a flowchart of the method of Fig. 2 according to the second embodiment;
- Fig. 8: shows a flowchart of the method of Fig. 2 according to the third embodiment;
- Fig. 9: shows a flowchart of an implementation of the method of Fig. 2;
- Fig. 10: shows a schematic block diagram of an embodiment of a station for performing the method of any of Figs. 2 and 6 to 9; and
- Fig. 11: schematically illustrates a radio network comprising instances of the station and the radio access network.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a 5G New Radio (NR) implementation, it is readily apparent that the technique described herein may also be implemented in any other radio network, including 3GPP Long Term Evolution (LTE) or a successor thereof, Wireless Local Area Network (WLAN) according to the standard family IEEE 802.11 and/or ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising a computer processor and memory coupled to the processor, wherein the memory is encoded with one or more programs that may perform the functions and steps or implement the units and modules disclosed herein.

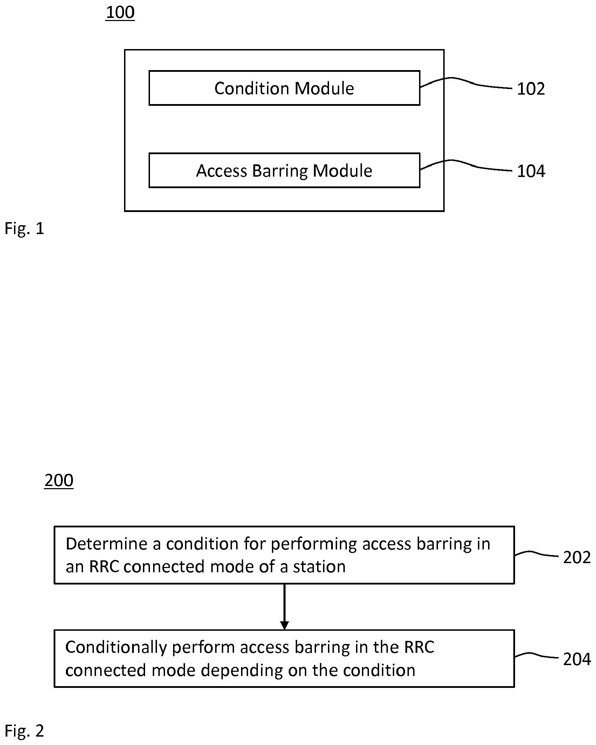

Fig. 1 schematically illustrates a block diagram for an embodiment of a device for barring access of a station to a radio access network (RAN), when the station is in a radio resource control (RRC) connected mode with the RAN. The device is generically referred to by reference sign 100.

The embodiment of the device 100 comprises a condition module or condition unit 102 configured to determine a condition for performing access barring in the RRC connected mode. The device 100 further comprises an access barring module or access barring unit 104 configured to conditionally perform the access barring depending on the condition.

Fig. 2 shows a flowchart for an embodiment of a method of barring access of a station in a RRC connected mode to a RAN. The method is generically referred to by reference sign 200.

The embodiment of the method 200 comprises a step 202 of determining a condition for performing access barring in an RRC connected mode of the station. In a step 204 of the method 200, the access barring is conditionally performed, namely depending on the determined condition.

The technique enables conditional access barring in the RRC connected mode. The device 100 may perform the method 200. For example, the modules or units 102 and 104 may perform the steps 202 and 204, respectively. The station may embody the device 100. The station may perform the method 200.

The RRC connected mode may be a mode or state of a RRC layer according to a radio communication protocol, e.g., according to 3GPP LTE or IEEE 802.11 Wi-Fi. The station may be any radio device configured to access the RAN. The station may include a user equipment (UE, e.g., according to 3GPP), an access point (AP, e.g. according to Wi-Fi) or a non-AP station, e.g., a mobile station or a portable station. Alternatively or in addition, the station may be a device for machine-type communication (MTC) and/or an Internet-of-Things (loT) device.

The RAN may include at least one base station (e.g., an evolved NodeB or eNB), e.g., in one or more cells of the RAN. The RAN (e.g., the base station) may transmit the configuration information to the device 100 (e.g., to the station).

Conditionally performing the access barring in the RRC connected mode may encompass that the access barring is triggered by a (e.g., necessary or sufficient) condition in the RRC connected mode or performed if (e.g., only if) the condition is fulfilled in the RRC connected mode.

In a first embodiment, the condition includes an event, e.g. an event of the radio communication protocol. The event may include expiry of one or more timers. In a second embodiment combinable with the first embodiment, the condition depends on configuration information received at the device 100 (e.g., at the station) from the RAN. In a third embodiment combinable with the first embodiment and/or the second embodiment, the condition depends on configuration information predefined at the device 100 (e.g., at the station).

The configuration information may be indicative of whether access barring is to be performed in the RRC connected mode, of the condition that triggers the access barring in the RRC connected mode and/or of access parameters that are to be applied to the access barring in the RRC connected mode (e.g., that are to be evaluated when checking whether or not the access is barred).

For example, the configuration information may relate to, or may be indicative of, a resource of the RAN. The station attempting to access the resource may trigger performing the access barring. That is, attempting to access the resource is an example for the condition that triggers performing the access barring.

The configuration information may include a flag to indicate whether access barring (e.g., as used for stations in RRC idle mode) applies also to stations in the RRC connected mode. Alternatively or in addition, separate access barring parameters (e.g., a separate barring bitmap and/or a separate access barring mechanism) may be introduced for access barring in the RRC connected mode.

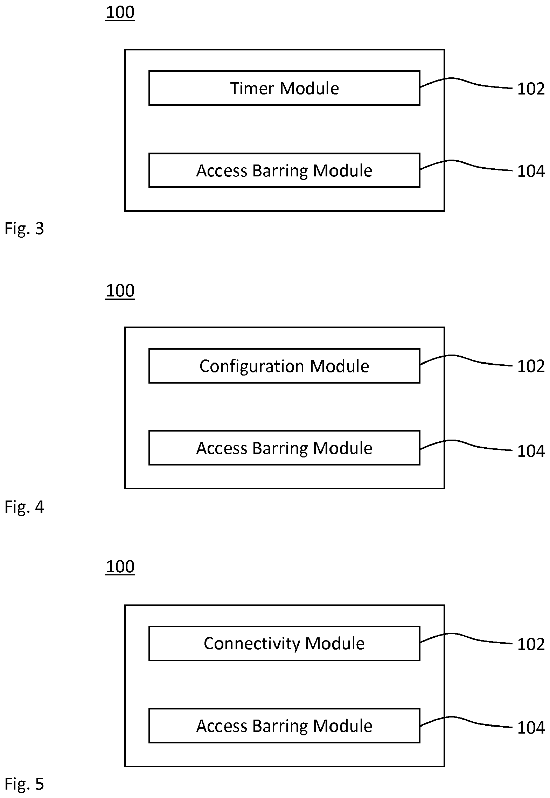

Fig. 3 shows a schematic block diagram for the device 100 according to the first embodiment. The device 100 comprises a timer module 102 for maintaining one or more timers when the station is in the RRC connected mode. The device 100 further comprises an access barring module 104 for conditionally performing access barring in the RRC connected mode, wherein a condition for performing the access barring includes expiry of at least one of the one or more timers. As the timer module 102 relates to the condition, the timer module 102 may be an implementation of the condition module 102.

Fig. 4 shows a schematic block diagram for the device 100 according to the second embodiment. The device 100 comprises a configuration module 102 for receiving configuration information from the RAN, which is indicative of whether the access barring in the RRC connected mode is omitted, performed according to access barring parameters dedicated to the RRC connected mode or performed according to access barring parameters applied in an RRC idle mode of the station. The device 100 further comprises an access barring module 104 for conditionally performing access barring in the RRC connected mode depending on the configuration information. As the configuration module 102 relates to the condition, the configuration module 102 may be an implementation of the condition module 102.

Fig. 5 shows a schematic block diagram for the device 100 according to the third embodiment. The device 100 comprises a connectivity module 102 for establishing the RRC connected mode with the RAN. The device 100 further comprises an access barring module 104 for conditionally performing access barring in the RRC connected mode depending on predefined configuration information indicative of whether the access barring in the RRC connected mode is omitted, performed according to access barring parameters dedicated to the RRC connected mode or performed according to access barring parameters applied in an RRC idle mode of the station. As the connectivity module 102 relates to the RRC mode, which (e.g., implicitly or explicitly) determines the condition depending on the configuration information predefined for the RRC connected mode, the connectivity module 102 may be an implementation of the condition module 102.

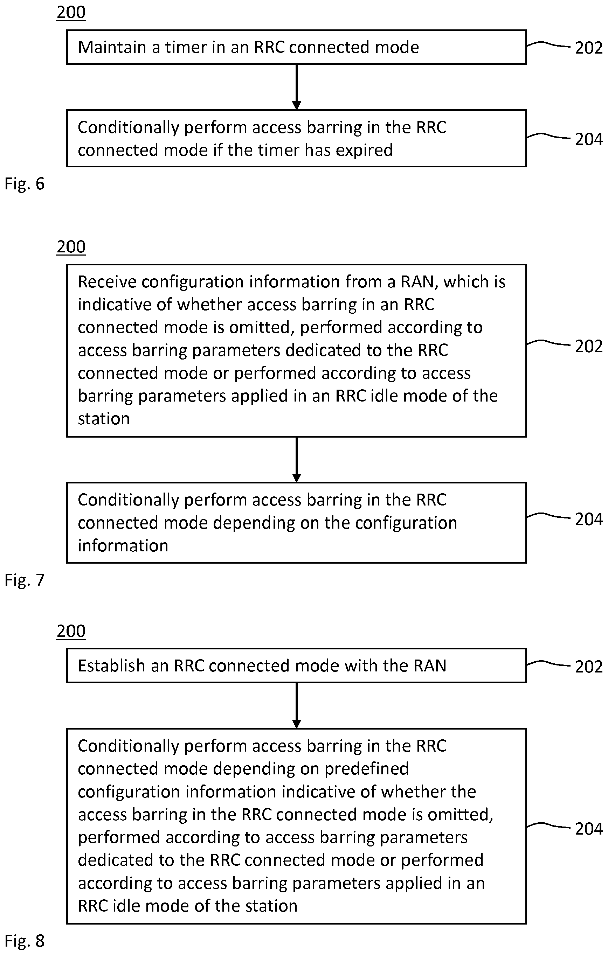

Fig. 6 shows a flowchart for the method 200 according to the first embodiment. In a step 202 of the method 200, which may be performed by the module 102, one or more timers are maintained while the station is in the RRC connected mode. In a step 204 of the method 200, which may be performed by the module 104, access barring is conditionally performing in the RRC connected mode, wherein a condition for performing the access barring includes an expiry of at least one of the one or more timers.

At least one of the one or more timers may be initiated upon establishing the RRC connected mode with the RAN. Alternatively or in addition, same and/or at least another one of the one or more timers may be initiated upon expiry of a timing advance for uplink synchronization with the RAN.

The method 200 may further comprise or initiate a step of receiving configuration information from the RAN. The received configuration information may be indicative of a duration of at least one of the one or more timers.

At least one of the one or more timers may count cycles of a discontinuous reception (DRX) or an extended DRX (eDRX). Alternatively or in addition, at least one of the one or more timers may include an inactivity timer that triggers the DRX or eDRX. The one or more timers may include any timer for controlling the DRX or eDRX. For example, the one or more timers may include a Short-Cycle Timer and/or a Retransmission Timer for the DRX or eDRX.

The access barring may be performed according to access barring parameters for the RRC connected mode.

Fig. 7 shows a flowchart for the method 200 according to the second embodiment. In a step 202 of the method 200, which may be performed by the module 102, configuration information is received from the RAN, which is indicative of whether the access barring in the RRC connected mode is omitted, performed according to access barring parameters dedicated to the RRC connected mode or performed according to access barring parameters applied in an RRC idle mode of the station. In a step 204 of the method 200, which may be performed by the module 104, access barring is conditionally performed in the RRC connected mode depending on the received configuration information.

The configuration information may be represented by a bit string, i.e., at least 2 bits. The configuration information may be received in system information (SI) broadcasted by the RAN. The configuration information may be included in at least one of a master information block (MIB) of the RAN and a system information block (SIB) of the RAN. Alternatively or in combination, the configuration information may be received from the RAN during establishing the RRC connected mode and/or in signaling dedicated to the station.

Fig. 8 shows a flowchart for the method 200 according to the third embodiment. In a step 202 of the method 200, which may be performed by the module 102, the RRC connected mode is established with the RAN. In a step 204 of the method 200, which may be performed by the module 104, access barring is conditionally performed in the RRC connected mode depending on predefined configuration information indicative of whether the access barring in the RRC connected mode is omitted, performed according to access barring parameters dedicated to the RRC connected mode or performed according to access barring parameters applied in an RRC idle mode of the station.

The predefined configuration information may be at least one of hardcoded at the device 100 (e.g., at the station) and specified by a technical standard that is implemented by the station and/or the RAN. For example, an equivalence between access barring parameters for the RRC idle mode and the access barring parameters for the RRC connected mode may be specified by a technical standard that is implemented by the station.

In any embodiment, one or more of the access barring parameters for the RRC connected mode may be predefined. The predefined access barring parameters may be at least one of stored at the station and specified by a technical standard that is implemented by the station and/or the RAN.

Alternatively or in addition, in any embodiment, one or more of the access barring parameters for the RRC connected mode may be received from the RAN. The access barring parameters for the RRC connected mode may be received in SI broadcasted by the RAN. The access barring parameters for the RRC connected mode may be received from at least one of an MIB of the RAN and an SIB of the RAN.

In any embodiment, the access barring parameters for the RRC connected mode may include at least one of a barring time, a barring factor and a barring bitmap.

The barring time and/or the barring factor may define an Access Class Barring (ACB), e.g., according to 3GPP LTE Release 8. The barring time and/or the barring factor may be received in an SIB Type 2. Performing the ACB, e.g., evaluating the condition for the ACB, may include drawing a random number. The evaluation may result in barring the access (e.g., the resource is not used by the station), if the drawn random number is greater than the barring factor. The access to the radio resource may be barred for the barring time.

Alternatively or in addition, the barring bitmap may define an Extended Access Barring (EAB), e.g., according to 3GPP LTE Release 11. The bitmap may be received in an SIB Type 14. The bitmap may be indicative whether or not an access of the station is currently barred (e.g., the resource is not used by the station). The access may be barred based on a class of the station. The station may re-attempt the access for using the resource (e.g., repeat performing the access barring) at any later point in time, e.g., by receiving an updated barring bitmap. Alternatively or in addition by using a further instance of the barring bitmap, the barring bitmap may define a barring mechanism for narrowband (NB) access, e.g., according to 3GPP LTE Release 13 and/or for stations implementing a so-called Internet-of-Things (loT) device (which may also be referred to as NB-loT access barring).

The barring time may define a deferral of accessing the RAN. The station (e.g., as controlled by the device 100) may defer accessing the resource of the RAN to expiry of the barring time. Alternatively or in addition, the barring factor may define a probability and/or a rate of accessing the RAN.

The barring bitmap may include a plurality of flags (e.g., represented by individual bits). Each flag may correspond to an access class. Each flag may be indicative of whether or not accessing the RAN is (e.g., currently) barred for the resource or the station belonging to the corresponding access class.

In any embodiment, accessing the RAN may include using (e.g., requesting for or transmitting on) a resource of the RAN by the station (e.g., as controlled by the device 100). The control information may further be indicative of the resource.

In any embodiment, conditionally performing the access barring may include a step of evaluating a barring condition for the access barring in the RRC connected mode according to the access barring parameters for the RRC connected mode, and a step of selectively using the resource of the RAN depending on a result of the evaluation. The evaluating step may also be referred to as an access barring check. Using the resource may also be referred to as the access.

The resource of the RAN may relate to traffic (e.g., data traffic) originating from the station. Using the resource may include transmitting data on a physical uplink shared channel (PUSCH) or a narrowband PUSCH (NPUSCH).

The resource may include a radio resource. The radio resource may have been previously granted by the RAN to the station and/or may be semi-persistently scheduled (SPS) by the RAN for the station.

Using the resource of the RAN may include sending a scheduling request (SR), e.g., for transmitting data from the station, to the RAN in an uplink or to another station in a sidelink. Alternatively or in addition, using the resource of the RAN may include transmitting on a physical uplink control channel (PUCCH) from the station to the RAN.

Alternatively or in addition, using the resource of the RAN may include performing a random-access (RA) procedure with the RAN. The RA procedure may include transmitting a RA preamble (RAP) on a RA channel (RACH) of the RAN and receiving a RA response (RAR) on a physical downlink shared channel (PDSCH) of the RAN. The presence of the RAR may be indicated by downlink control information (DCI) on a physical downlink control channel (PDCCH) of the RAN. The RAR may be indicative of a timing advance (TA). The RA procedure may further include transmitting an uplink message, e.g., a RRC connection request for establishing the RRC connected mode with the RAN.

In any embodiment, the access barring parameters for the RRC connected mode may include a first set of parameters for data plane traffic originating from the station and a second set of parameters for control plane signaling originating from the station.

The access barring may include at least one of access class barring (ACB), enhanced access barring (EAB) and narrowband Internet-of-Things (NB-IoT) access barring. The device 100 may perform EAB prior to performing ACB.

Any "trigger" described herein for conditionally performing the access barring may be implemented in any embodiment as the condition for performing the access barring. Multiple triggers or conditions may be implemented by logically combining the corresponding conditions, e.g., by an AND-combination or conjunction.

Conditionally performing the access barring may be triggered by at least one of the SR of the station and data to be transmitted at the station. Conditionally performing the access barring may be triggered before transmitting a SR and/or the data.

The access barring, e.g., at least the evaluation, may be performed before each SR. That is, if the resource to be accessed includes transmitting a SR, the access barring may be performed for each SR. Access barring may be checked per SR.

Alternatively or in addition, conditionally performing the access barring may be triggered before transmitting the SR on a PUCCH and/or before a performing the RA procedure.

Alternatively or in addition, conditionally performing the access barring may be triggered before transmitting on a radio resource. The radio resource may be semi-persistently scheduled.

Alternatively or in addition, conditionally performing the access barring may be triggered before transmitting on the PUCCH in the RRC connected mode.

Alternatively or in addition, conditionally performing the access barring may be triggered before performing the RA procedure in the RRC connected mode. The access barring, e.g., at least the evaluation, may be performed before each RA procedure. That is, if the resource to be accessed includes performing a RA procedure, the access barring is performed for each RA procedure. Access barring is checked per RA procedure.

Alternatively or in addition, conditionally performing the access barring may be triggered by the DRX or eDRX of the station. For example, in order to limit the barred accesses, accessing the PUCCH and/or performing the RA procedure may be barred in the RRC connected mode if the station uses DRX or eDRX. In other words, the condition relates to PUCCH and/or RA procedure (as the resource) in conjunction with DRX or eDRX.

The embodiments are combinable. For example, the condition may relate to a specific resource in conjunction with DRX (or eDRX) and/or expiry of one or more timers.

For clarity and not limitation, an LTE implementation of the technique is described using a UE as the station or device 100. The technique may be implemented without access barring or control at the side of the station for mobile terminated (MT) traffic (i.e., any traffic toward the station). The MT traffic may be triggered or scheduled by the RAN, so that the eNB of the RAN has means to control the load caused by the MT traffic.

Mobile originated (MO) traffic is initiated by an SR, which either triggers an RA or is transmitted over PUCCH. If the UE has uplink synchronization (e.g., the TA is still valid and the UE is in-synchronization) and the UE has a PUCCH resource, the UE attempts transmitting the SR on PUCCH to request the eNB for an uplink grant, because the UE has data to be transmitted. In one embodiment, an access barring check is performed prior to transmitting the SR (i.e., the access barring is performed with the SR as the resource). The UE is only allowed to transmit the SR on the PUCCH, if it is not barred (e.g., as a result of evaluating the barring condition).

If the UE is out-of-synchronization in the RRC connected mode (e.g., because a timer of the TA has expired), PUCCH resources are released, and the SR at the UE triggers a RA in order to get a new TA and an UL grant. The latte may be the only supported way for an NB-loT device as the station to transmit an SR. In one embodiment an access barring check is performed prior to performing the RA procedure (e.g., transmitting RAP) in the RRC connected mode (i.e., the access barring is performed with the RA as the resource). The UE is only allowed to perform or initiate the RA procedure, if the UE is not barred (e.g., as a result of evaluating the barring condition).

Any embodiment may be implemented using at least one of the following options for defining the access barring parameters (e.g., barring configuration or barring bitmap) applied in the RRC connected mode. In other words, the RAN may configure at least one of the following options for defining the access barring parameters applied to UEs in the RRC connected mode.

According to a first option, the same access barring parameters as for UEs in RRC idle mode apply to UEs in the RRC connected mode. According to a second option, separate access barring parameters are introduced (e.g., hardcoded in the UE or received from the RAN) for UEs in the RRC connected mode. According to a third option (which is combinable with the first and second options), an indication or flag (e.g., in the configuration information) is indicative of whether or not the same access barring parameters as for UEs in RRC idle mode apply to UEs in the RRC connected mode.

The skilled person is readily in a position to implement the first option. In an implementation of the second option, separate access barring parameters are applied in different RRC modes. In a first example implementation of the second option, the access parameters dedicated to the RRC connected mode may be broadcasted from the RAN (e.g., in the step 202) using an SIB Type 2. The SIB Type 2, as outlined below, e.g., for performing ACB in the step 204, may include at least some of the underlined elements.

### SystemInformationBlockType2 information element

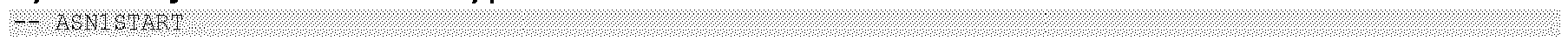

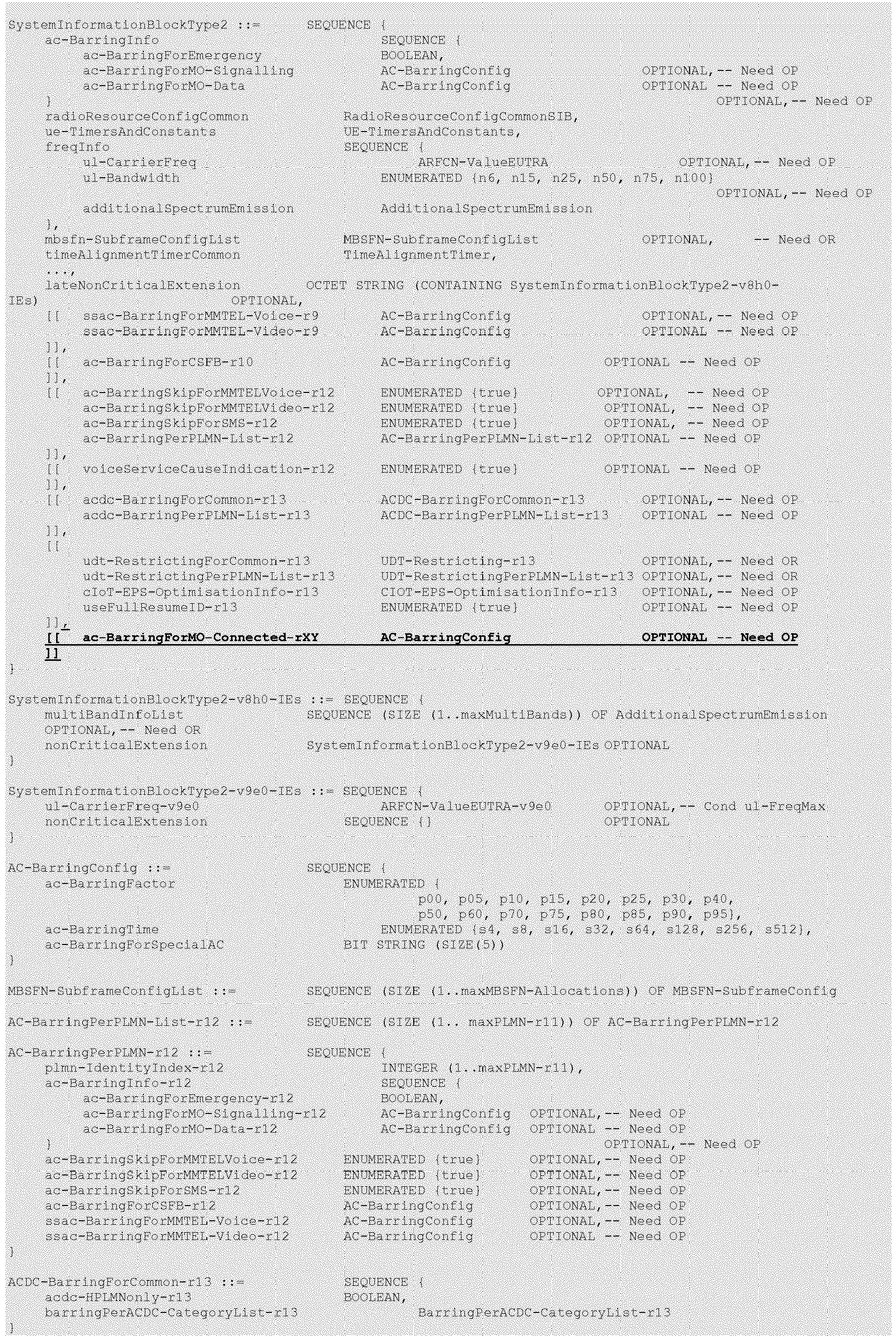

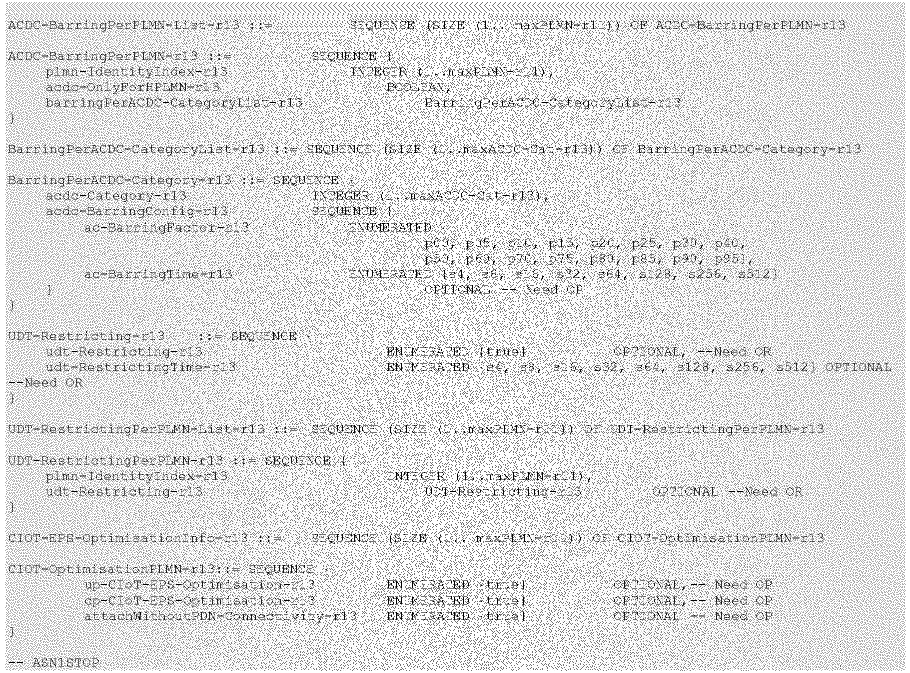

In a variant of the first example implementation of the second option, a separation of access barring parameters (e.g., similar to above separation for the RRC idle mode) is applicable to "MO-data" and "MO-signaling" in the RRC connected mode.

Alternatively or in combination with the first example implementation, a second example implementation of the second option may conditionally perform EAB in the step 204 by transmitting (e.g., in the step 202) from the RAN an SIB Type 14 including at least some of the following underlined elements.

### SystemInformationBlockType14 information element

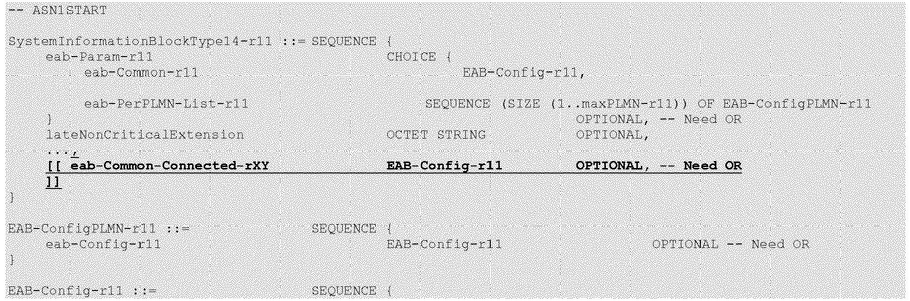

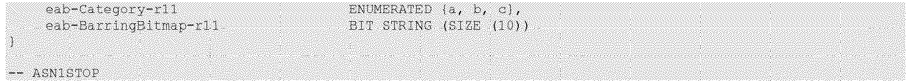

In the above second example implementation of the second option, the access barring parameters (e.g., the barring bitmap for EAB) of the RRC connected mode share with the legacy RRC idle configuration those parameters that are specific for different public land mobile networks (PLMNs). In a variant of the second example implementation of the second option (which is combinable with any variant of the first example implementation), the per-PLMN applicability is separate for the different RRC modes.

Alternatively or in combination with the first or second example implementation, a third example implementation of the second option may conditionally perform NB-loT access barring in the step 204 by transmitting (e.g., in the step 202) from the RAN an SIB Type 14 for narrowband (NB) devices including at least some of the following underlined elements.

### SystemInformationBlockType14-NB information element

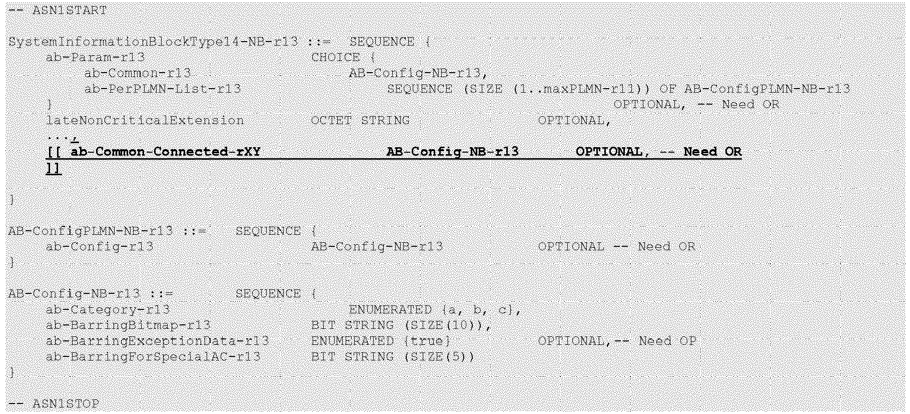

In the above third example implementation of the second option, the access barring parameters (e.g., the barring bitmap for NB-loT access barring) of the RRC connected mode share with the legacy RRC idle configuration PLMN-specific parameters. In a variant of the third example implementation of the second option (which is combinable with any variant of the first example implementation), the per-PLMN applicability is separate for the different RRC modes.

As pointed out above, any implementation of the third option is combinable with any implementations of the first and second options. In an example implementation of the third option, one bit of the bit string representing the configuration information is an equivalence flag. If the equivalence flag is set to TRUE, access barring in the step 204 applies also to UEs in the RRC connected mode with the same access barring parameters (e.g., ACB configuration and/or barring bitmap) as for UEs in the RRC idle mode. If the equivalence flag is set to FALSE, access barring is not applicable to UEs in RRC connected mode according to the conditionality in the step 204.

Example implementations of the third option may be based on the above example implementations for the second option, wherein the corresponding SIB further includes (e.g., in the same location) at least some of the following elements.

A first example implementation of the third option conditionally performs ACB in the step 204 depending on the following configuration information in the corresponding SIB.

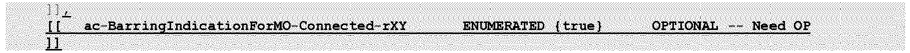

A second example implementation of the third option (which is combinable with the first example implementation) conditionally performs EAB in the step 204 depending on the following configuration information in the corresponding SIB.

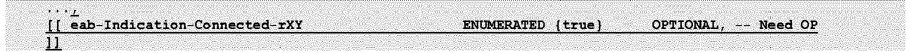

A third example implementation of the third option (which is combinable with the first example implementation) conditionally performs NB-loT access barring in the step 204 depending on the following configuration information in the corresponding SIB.

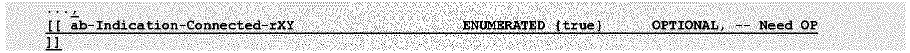

In a variant of any example implementation for the third option, the configuration information includes an indication of more than one bit (i.e., the bit string). The bit string is indicative of other configurations as well. For example, the configuration information may indicate a condition for the access barring that performs access barring in the step 204 in the RRC connected mode only but not in the RRC idle mode.

Any of the above embodiments (particularly any of the options and example implementations therefor) may be combined with a condition for the conditional access barring according to the step 204 as described below. For example, the further condition may restrict performing the access barring according to the step 204 to certain events (e.g., expiry of one or more timers) and/or certain resources. The further condition is also referred to as a trigger.

The condition determined in the step 202, the configuration information received in the step 202 and/or the (e.g., predefined) configuration information used in the step 204 defines when to perform the access barring according to the step 204 (e.g., when to trigger the access barring check or evaluation) in the RRC connected mode.

The SR at the UE either triggers a RA procedure or the SR is transmitted using the UEs PUCCH resources. In the case of the UE attempting to send an SR via the PUCCH of the RAN, the access barring check (i.e., the evaluation of whether or not access to the PUCCH is barred for the UE) may be performed prior to sending anything on PUCCH.

Performing the access barring for any PUCCH transmission (i.e., using a condition that relates to any PUCCH transmission as the resource) could have a negative impact on legacy functionality (e.g., since PUCCH is not only used for transmitting SR, but also for PDSCH ACK/NACK and CQI information). This can be reduced or avoided, wherein the condition relating to the PUCCH as the resource is more specific, e.g., according to below implementations of the technique.

In a first implementation of the technique, the access barring check is performed before an SR is transmitted over PUCCH. The impact on legacy functionality is smaller than checking access barring before any use of PUCCH, since SR is not sent that often.

In a second implementation of the technique, the access barring check is performed before PUCCH is transmitted whenever eDRX is used in the RRC connected mode, optionally in conjunction with the additional condition that access barring only applies after wake-up from the n-th DRX cycle and/or only for transmitting an SR on the PUCCH.

In a third implementation of the technique, the access barring check is performed before PUCCH is transmitted after a timer has expired. The timer may be an existing timer or a timer specific for the step 204. For example, the timer is started when the UE enters the RRC connected mode, optionally in conjunction with the additional condition that access barring only applies for SR. The third implementation can directly and effectively address the problem of a larger number of UEs residing in the RRC connected mode for a long time. The condition of the third implementation may be further restricted by logically combining the expiry of the time with the use of eDRX (e.g., according to the second implementation).

Any of the embodiments, particularly all the above implementations, may restrict performing the access barring to UEs according to 3GPP Release 15, such that legacy behavior is not affected.

For the case when the SR at the UE triggers a RA procedure (i.e., the condition relates to the transmission of data as the resource when the UE is out-of-synchronization), the condition may be combined (e.g., OR-combined) with not having any access barring check at all for PUCCH or any of the above implementations of the technique, i.e., combined with a condition relating to the PUCCH as the resource.

An example for a condition relating to a SR triggering a RA procedure may require always performing an access barring check prior to the RA procedure. This means that either the UE has been in RRC connected mode long enough that the TA timer has expired, or the UE is a NB-loT device and the SR relates to a subsequent transmission. Alternatively, a timer (e.g., with a duration longer than a duration for the timer in the above-described PUCCH access) may be used for the SR-triggered RA procedure. That is, similar conditions as in the above-described implementations for the PUCCH access may be applied for SR over RA.

Below implementations of the technique describe a condition relating to RA as the resource, which may be OR-combined with any of the above conditions relating to PUCCH as the resource.

In a first implementation of the technique, the access barring is performed before any kind of RA in the RRC connected mode. Alternatively, the condition relating to the RA procedure may be more specific, e.g., according to at least one of the following further requirements such that access barring check is performed only in the event of the further requirement. In a second implementation, the access barring is performed before an SR is transmitted over RA. In a third implementation, the access barring is performed before determining a position based on an observed time difference of arrival (OTDoA), i.e., positioning based on the transmission of an uplink signal. In a fourth implementation, the access barring is performed before a handover, i.e. a RA procedure between the UE and a target cell. In a fifth implementation, the access barring is performed before RA is transmitted whenever eDRX is used in the RRC connected mode, optionally in conjunction with the additional condition that access barring only applies after wake-up from the n-th DRX cycle and/or only for an SR. In a sixth implementation, the access barring is performed before RA is transmitted after a new timer has expired. The timer is started when the UE enters the RRC connected mode. Optionally, the condition is further restricted to a SR at the UE causing the RA. This can directly address the problem of a larger number of UEs residing in the RRC connected mode for a long time.

The conditions of above implementations may be logically combined. E.g., a timer-based condition may be AND-combined with the restriction to eDRX.

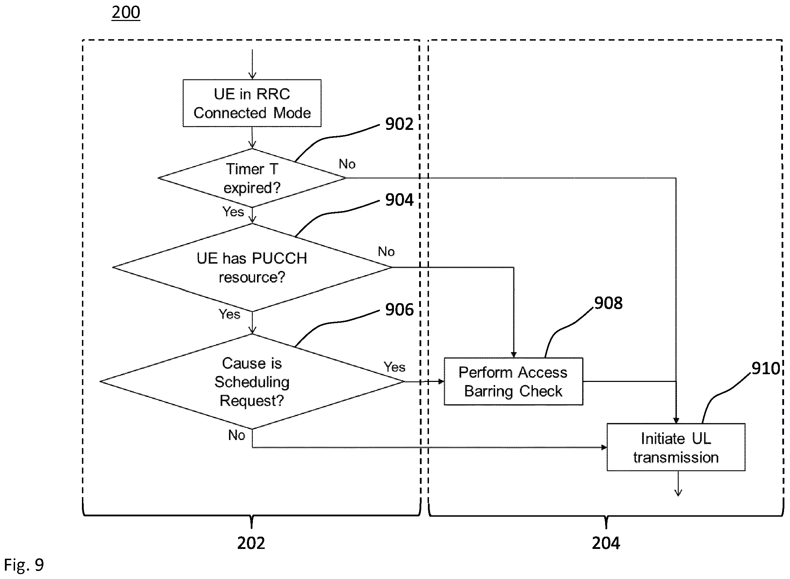

Fig. 9 shows a flowchart for an implementation of the method 200. When the UE is in the RRC connected mode, a substep 902 of the step 202 assess if a timer (e.g., a common timer for both PUCCH and RA being the resources) has expired. By way of example, the timer is used to control the access attempts in the RRC connected mode for any RA attempt according to a substep 904 and for SR over PUCCH according to the substep 906 of the step 202. Depending on this logically combined condition, the access barring is performed, i.e., the barring condition is evaluated in a substep 908 of the step 204 and, if a result of the evaluation indicates that the access is not barred for the UE, the resource is used in a substep 910 of the step 204.

In variants of any of the implementations, e.g., variants of the implementation of Fig. 9, separate timers may be used for RA and PUCCH access attempts (i.e., a first timer with a first duration for the RA being the resource, and a second timer with a second duration for the PUCCH being the resource). Alternatively or in addition, the starting of the timer may vary, e.g., depend on the corresponding resource. For example, the timer may be started when the UE enters the RRC connected mode and/or when the TA timer expires.

Furthermore, the logical condition (i.e., the timer-based requirement) in the substep 902 may be replaced with the condition that the UE is configured with eDRX in the RRC connected mode and/or that a certain number, n, of DRX cycles has passed.

Mobile terminated (MT) traffic does not has to be subject to the conditional access barring according to the technique, e.g., this since in the case of MT traffic a RA procedure is triggered (e.g., using RRC signaling) by the RAN (e.g., the corresponding eNB of the RAN). The RAN-triggered RA procedure is used for a UE without uplink synchronization (i.e., when the UE is RRC-connected and out of synchronization) in order to regain uplink synchronization (i.e., obtaining the TA, e.g., to transmit HARQ ACKs in the uplink). In an advanced embodiment, the conditional access barring is also applied to MT traffic. For example, the eNB needs not to keep track of the TA timer of the UE and can still control the load caused by the MT traffic (e.g. by conditionally barring the RA in the step 204).

A condition relating to the RA procedure, e.g., for conditionally performing NB-loT access barring according to the step 204, may be specified in an 3GPP implementation by changing Section 5.1.1 (on "Random Access Procedure initialization") of the techncial specification 36.321 V14.1.0, as indicated by bold type below.

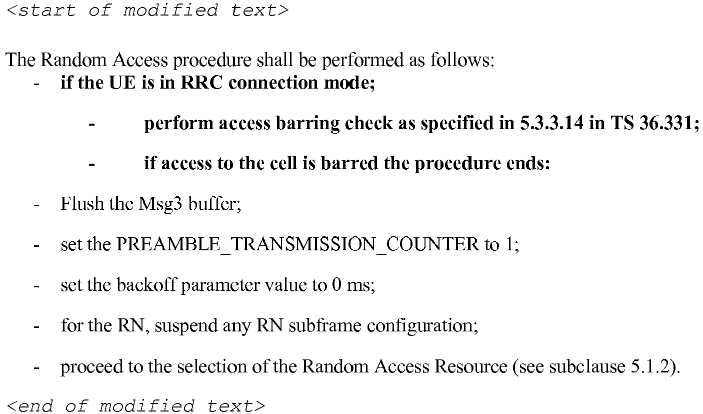

Implementing a condition that relates to sending an SR on the PUCCH of the RAN may be specified on the MAC layer, as indicated in bold type below.

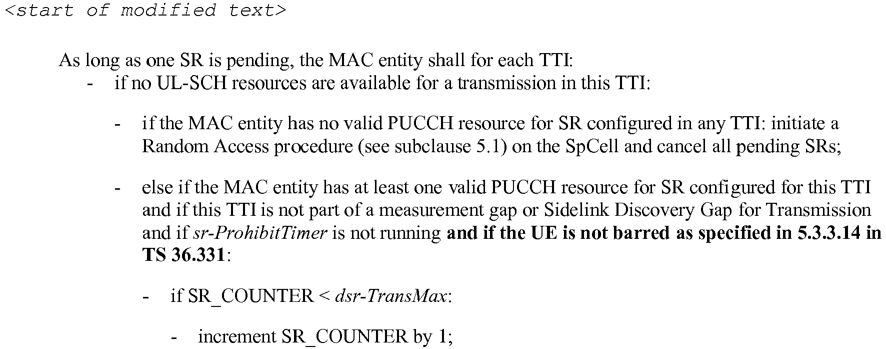

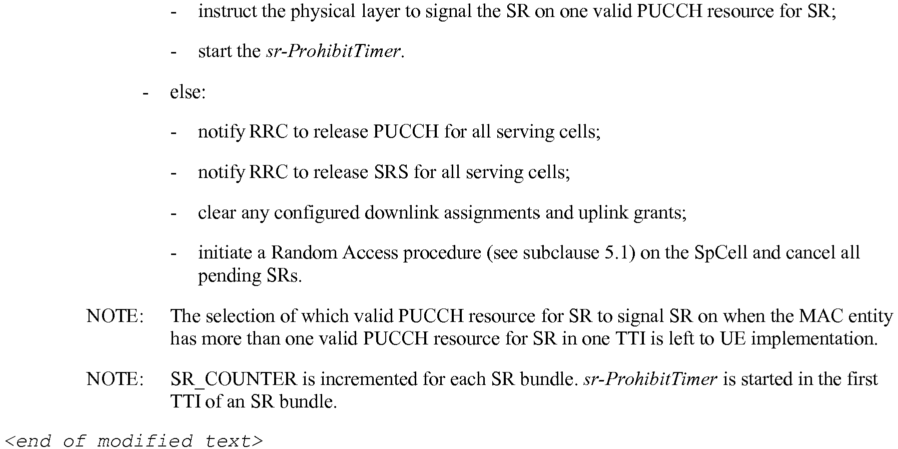

Further, the access barring check according to the 3GPP technical specification 36.331V14.1.0 may be changed similarly, as indicated in bold type below.

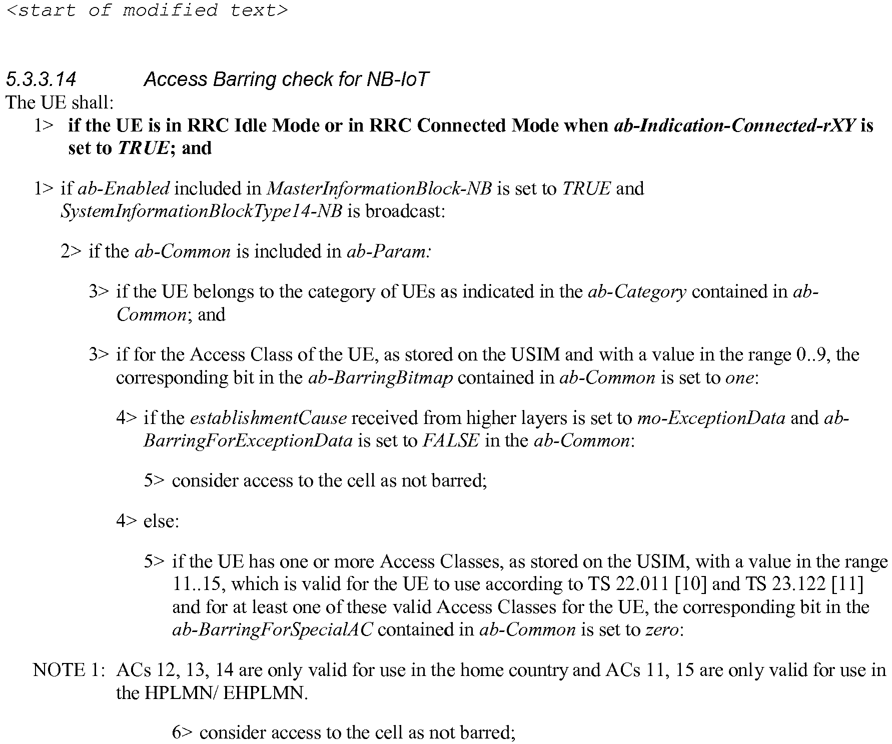

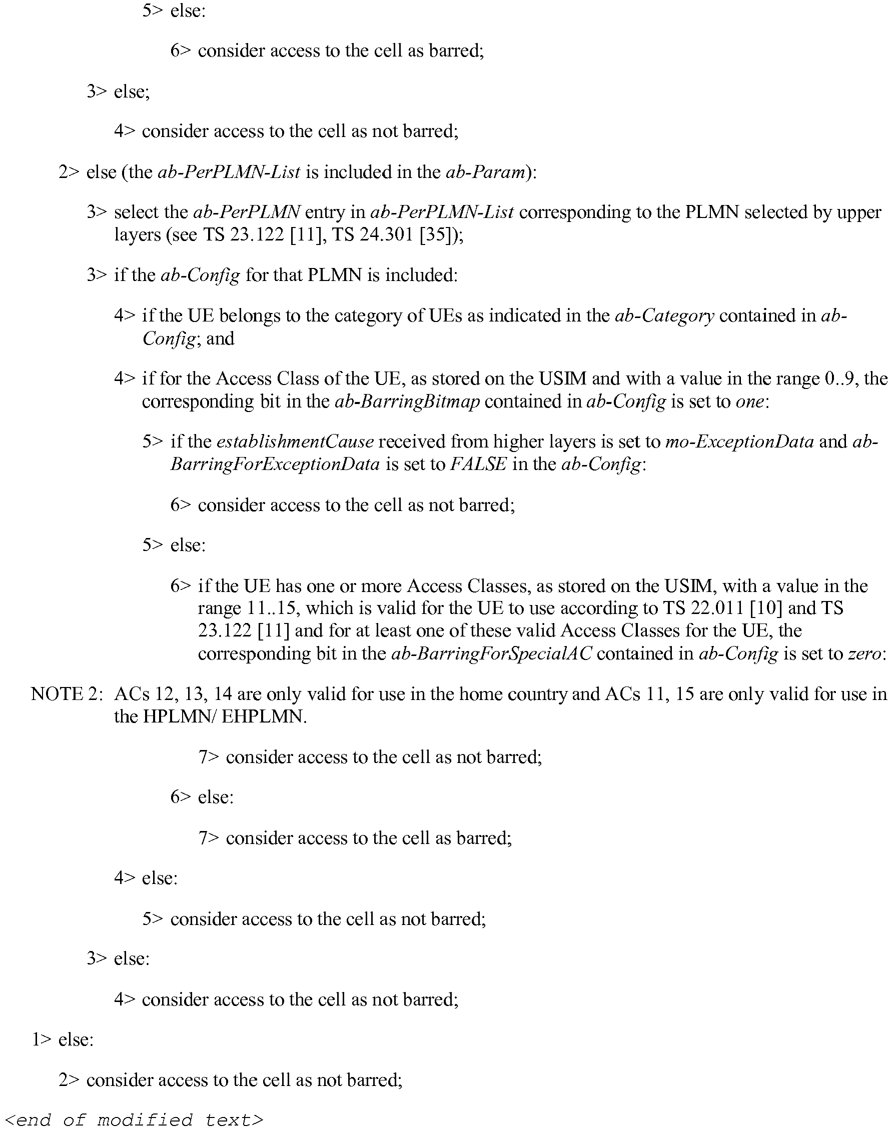

Moreover, in the 3GPP technical specification 36.321 V14.1.0 for LTE, RA is triggered when a certain amount of SR attempts have failed. One embodiment uses a condition that bars the UE from triggering the RA procedure if the SR failed.

Furthermore, a lightly connected state (also referred to as "Lightweight Connection") may be specified (e.g., according to 3GPP Release 14), in which UEs remain in the lightly connected state (e.g., instead of entering the RRC idle mode). Paging functionality may be provided to those UEs by the eNB, instead of the mobility management entity (MME). The technique may be applied to the lightly connected state such that UEs in this state have to conditionally check barring prior to access. That is, the technique is applicable by replacing "the RRC connected mode" by a "Lightweight Connected State" in any embodiment or implementation.

UEs for eMTC, UEs according to Category M1 (e.g., for Bandwidth-reduced Low-complexity or BL), UEs using Coverage Enhancement (CE) and/or NB-loT devices are in 3GPP Release 13 not required to read SI while in the RRC connected mode. Since SI and SIB2 must be read in the RRC idle mode, these UEs are, prior to establishing the RRC connection, aware of whether access barring is to be applied in the RRC connected mode or not, (e.g., by receiving the configuration information being indicative if "ab-Indication-Connected-rXY" is set to TRUE).

Any embodiment or implementation may use a spare bit in MIB or MIB-NB as the configuration information, which have to be received by UEs having long DRX cycles in the RRC connected mode. If the condition does not have to be dynamically controlled by the RAN, the indication may be given to the UE in dedicated signaling during the RRC connection setup. This may be implemented in accordance with the existing principle that the eNB releases UEs to the RRC idle mode for an SI update.

In a modified implementation, the RAN indicates whether or not barring is applied in the RRC connected mode in general, e.g., without relying on the current barring value. In this case yet another flag (as an example of the configuration information) would be communicated to the UE, e.g. in SI or RRC signaling, indicating whether UEs in the RRC connected mode must check access barring prior to access. If set to TRUE, the UE is required to check either the barring bitmap specific for the RRC connected mode, or the flag to see whether the legacy barring bitmap applies also to the RRC connected mode, prior to access to ensure access is not barred.

The technique may also be applied to grant-free access, in which case the UE can transmit its user payload without a dedicated grant at the risk of a collision with transmissions from other UEs. In this case, any embodiment or implementation can be applied, wherein the access barring check is introduced prior to the transmission on the grant-free resources, e.g. before a transmission on PUSCH or NPUSCH with a common "grant-free" SPS grant. That is, for a condition relating to an SPS-granted resource (i.e., the "grant-free" case), the configuration information may be realized by indicating in the DCI whether or not access barring is performed for SPS-granted resources.

For NB-loT devices as the UE, there is an access barring flag in MIB which is set whenever access barring is enabled. This means that when the flag is not enabled (e.g., in most cases), the UE does not have to check the full access barring bitmap in SIB Type 14-NB. The access barring check may stop after assessing this flag in MIB. This could also be used in any NB-loT implementation of the technique even if a different barring bitmap applies to the RRC connected mode.

In any embodiment or implementation, the UE in the RRC connected mode may monitor notifications on the paging channel of the RAN for SI updates. If there are no notifications for a predefined time, the UE may assume that the SI has not changed.

The bit string indication in the control information (e.g., indicating whether the same, a different barring bitmap, or no barring applies to the RRC connected mode) may use the following definitions.

| **bit string** | **condition** |
|---|---|
| 00 | No barring is performed in the RRC connected mode |
| 01 | Same access barring parameters apply in the RRC connected mode as in the RRC idle mode |
| 10 | Separate access barring parameters (e.g., included in SI) apply in the RRC connected mode |
| 11 | Spare |

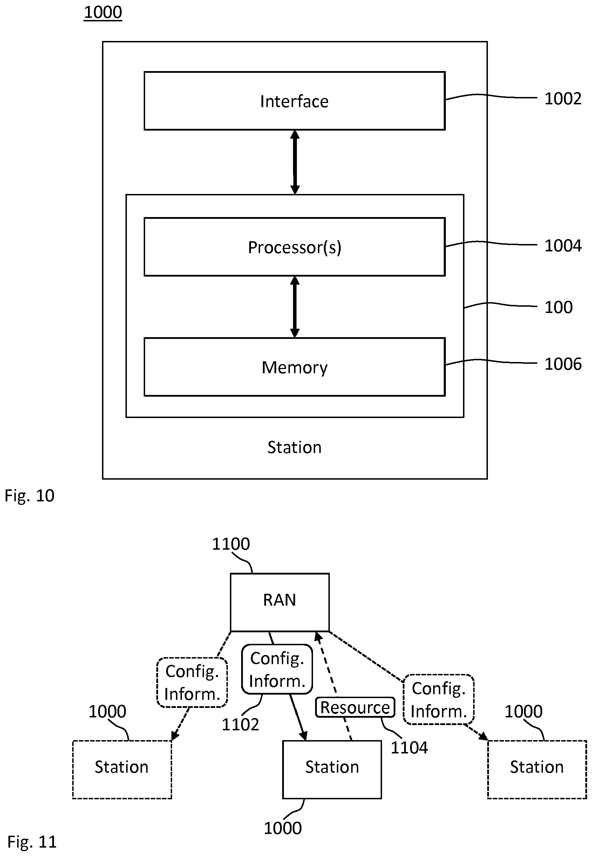

Fig. 10 shows a schematic block diagram for an embodiment of a station 1000, e.g., a UE. The station 1000 comprises a radio interface 1002 for radio communication with a RAN, one or more processor circuits 1004 for performing the method 200 and memory 1006 coupled to the processor circuits 1004. The memory 1006 may be encoded with instructions that implement the module 102 and/or 104.

The one or more processor circuits 1004 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other components of the station, such as the memory 1006, the functionality of any method aspect disclosed herein. For example, the one or more processor circuits 1004 may execute instructions stored in the memory 1006. Such functionality may include providing various features and steps discussed herein, including any of the benefits disclosed herein.

Fig. 11 schematically illustrates a radio network comprising a RAN 1100 and at least one instance of the station 1000 (e.g., a UE) in a RRC connected state with the RAN. The station 1000 includes an embodiment of the device 100 or an implementation of the method 200.

The RAN 1100 may include a plurality of base stations (e.g., eNBs or APs). The station 1000 may be RRC-connected to one the base stations.

The RAN 1100 transmits configuration information 1102 to the station 1000 in an implementation of the step 202. The device 100 is configured for conditionally performing the access barring in the RRC connected mode according to the received configuration information. If the condition is fulfilled, the access barring is performed in an implementation of the step 204. The access barring either leads to accessing (e.g., using) a resource 1104 of the RAN 1100 or the access to the resource 1104 is barred, e.g., deferred.

An attempt of the station 1000 to use a resource 1104 of the RAN 1100 triggers the conditional access barring method 200. The resource 1104 may include transmitting on a radio resource scheduled by the RAN 1100 and/or transmitting a request to a scheduling service of the RAN (i.e., a scheduling request) for being granted a radio resource (e.g., by receiving a scheduling grant in downlink control information). Alternatively or in addition, the attempt may include the presence of data to be transmitted at the station, e.g., as indicated by a (e.g., MAC) buffer status at the station 1000.

As has become apparent from above description of exemplary embodiments, the technique provides tools for the RAN, e.g., an eNB, to handle a large number of access attempts from UEs in RRC connected mode, which would otherwise congest the RAN or bring it to almost a complete halt.

The technique can be implemented to allow the RAN, e.g., an eNB, to dynamically control and bar the access attempts also from UEs in the RRC connected mode.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (200) of barring access of a station (1000) in a radio resource control, RRC, connected mode to a radio access network, RAN (1100), the method comprising the following steps:
maintaining (202) one or more timers when the station (1000) is in the RRC connected mode; and
conditionally performing (204) access barring in the RRC connected mode, wherein the condition for performing the access barring includes expiry of at least one of the one or more timers, and the at least one of the one or more timers is initiated upon establishing the RRC connected mode with the RAN (1100).

2. The method of claim 1, wherein at least one other of the timers is initiated upon expiry of a timing advance for uplink synchronization with the RAN (1100).

3. The method of claim 1 or 2, further comprising the step of receiving configuration information (1102) from the RAN (1100), the configuration information (1102) being indicative of a duration of at least one of the one or more timers.

4. The method of any one of claims 1 to 3, wherein at least one of the one or more timers counts cycles of an extended discontinuous reception, eDRX.

5. The method of any one of claims 1 to 4, wherein at least one of the one or more timers includes an inactivity timer that triggers an extended discontinuous reception, eDRX.

6. The method of any one of claims 1 to 5, wherein the access barring is performed according to access barring parameters for the RRC connected mode.

7. The method of claim 6, wherein the access barring parameters for the RRC connected mode include at least one of a barring time, a barring factor and a barring bitmap.

8. The method of claim 6 or 7, wherein conditionally performing (204) the access barring further includes:
evaluating a condition for the access barring in the RRC connected mode according to the access barring parameters for the RRC connected mode; and
selectively using a resource (1104) of the RAN (1100) depending on a result of the evaluation.

9. The method of claim 8, wherein the resource (1104) of the RAN (1100) relates to data traffic originating from the station (1000).

10. The method of any one of claims 1 to 9, wherein conditionally performing (204) the access barring is triggered by at least one of a scheduling request of the station (1000) and data to be transmitted at the station (1000).

11. The method of any one of claims 1 to 10, wherein conditionally performing (204) the access barring is triggered before transmitting a scheduling request and/or before transmitting on a radio resource (1104) that is semi-persistently scheduled and/or before transmitting on a PUCCH in the RRC connected mode and/or before performing a random-access procedure in the RRC connected mode.

12. The method of any one of claims 1 to 11, wherein conditionally performing (204) the access barring is triggered by an extended discontinuous reception, eDRX, of the station (1000).

13. A computer program product comprising program code portions for performing the steps of any one of the claims 1 to 12 when the computer program product is executed on one or more computing devices (1004).

14. The computer program product of claim 13, stored on a computer-readable recording medium (1006).

15. A device (100) for barring access of a station (1000) in a radio resource control, RRC, connected mode to a radio access network, RAN (1100), the device being configured to perform the steps of:
maintaining one or more timers when the station (1000) is in the RRC connected mode; and
conditionally performing access barring in the RRC connected mode, wherein the condition for performing the access barring includes expiry of at least one of the one or more timers, and the at least one of the one or more timers is initiated upon establishing the RRC connected mode with the RAN (1100).

16. The device of claim 15, further configured to perform or initiate the steps of any one of claims 2 to 12.

## Patentansprüche

1. Verfahren (200) zum Sperren von Zugang einer Basisstation (1000) in einem Funkressourcensteuerungs-,RRC-,Verbindungsmodus zu einem Funkzugangsnetzwerk, RAN (1100), wobei das Verfahren die folgenden Schritte umfasst:
Verwalten (202) eines oder mehrerer Zeitgeber, wenn die Station (1000) im RRC-Verbindungsmodus ist; und
bedingtes Durchführen (204) von Zugangssperrung im RRC-Verbindungsmodus, wobei die Bedingung für das Durchführen der Zugangssperrung einen Ablauf mindestens eines des einen oder der mehreren Zeitgeber umfasst, und der mindestens eine des einen oder der mehreren Zeitgeber bei Herstellung des RRC-Verbindungsmodus mit dem RAN (1100) initiiert wird.

2. Verfahren nach Anspruch 1, wobei mindestens ein anderer der Zeitgeber bei Ablauf einer Zeitvorstellung für Uplink-Synchronisation mit dem RAN (1100) initiiert wird.

3. Verfahren nach Anspruch 1 oder 2, ferner umfassend den folgenden Schritt:
Empfangen von Konfigurationsinformationen (1102) vom RAN (1100), wobei die Konfigurationsinformationen (1102) eine Dauer mindestens eines des einen oder der mehreren Zeitgeber anzeigen.

4. Verfahren nach einem der Ansprüche 1 bis 3, wobei mindestens einer des einen oder der mehreren Zeitgeber Zyklen eines verlängerten diskontinuierlichen Empfangs, eDRX, zählt.

5. Verfahren nach einem der Ansprüche 1 bis 4, wobei mindestens einer des einen oder der mehreren Zeitgeber einen Inaktivitätszeitgeber umfasst, der einen verlängerten diskontinuierlichen Empfang, eDRX, auslöst.

6. Verfahren nach einem der Ansprüche 1 bis 5, wobei die Zugangssperrung gemäß Zugangssperrparametern für den RRC-Verbindungsmodus durchgeführt wird.

7. Verfahren nach Anspruch 6, wobei die Zugangssperrparameter für den RRC-Verbindungsmodus mindestens eines von einer Sperrzeit, einem Sperrfaktor und einer Sperrungsbitmap umfassen.

8. Verfahren nach Anspruch 6 oder 7, wobei das bedingte Durchführen (204) der Zugangssperrung ferner umfasst:
Beurteilen einer Bedingung für die Zugangssperrung im RRC-Verbindungsmodus gemäß den Zugangssperrparametern für den RRC-Verbindungsmodus; und
selektives Verwenden einer Ressource (1104) des RANs (1100) in Abhängigkeit von einem Ergebnis der Beurteilung.

9. Verfahren nach Anspruch 8, wobei die Ressource (1104) des RANs (1100) mit Datenverkehr in Beziehung steht, der von der Station (1000) abgeht.

10. Verfahren nach einem der Ansprüche 1 bis 9, wobei das bedingte Durchführen (204) der Zugangssperrung durch mindestens eines von einer Dispositionsanforderung der Station (1000) und zu sendenden Daten an der Station (1000) ausgelöst wird.

11. Verfahren nach einem der Ansprüche 1 bis 10, wobei das bedingte Durchführen (204) der Zugangssperrung vor dem Senden einer Dispositionsanforderung und/oder vor dem Senden auf einer Funkressource (1104), die semipersistent disponiert wird, und/oder vor dem Senden auf einem PUCCH im RRC-Verbindungsmodus und/oder vor einem Durchführen einer Direktzugangsprozedur im RRC-Verbindungmodus ausgelöst wird.

12. Verfahren nach einem der Ansprüche 1 bis 11, wobei das bedingte Durchführen (204) der Zugangssperrung durch einen verlängerten diskontinuierlichen Empfang, eDRX, der Station (1000) ausgelöst wird.

13. Computerprogrammprodukt, umfassend Programmcodeabschnitte zum Ausführen der Schritte nach einem der Ansprüche 1 bis 12, wenn das Computerprogrammprodukt auf einer oder mehreren Computervorrichtungen (1004) ausgeführt wird.

14. Computerprogrammprodukt nach Anspruch 13, gespeichert auf einem computerlesbaren Aufzeichnungsmedium (1006).

15. Vorrichtung (100) zum Sperren von Zugang einer Basisstation (1000) in einem Funkressourcensteuerungs-,RRC-,Verbindungsmodus zu einem Funkzugangsnetzwerk, RAN (1100), wobei die Vorrichtung zum Ausführen der folgenden Schritte konfiguriert ist:
Verwalten eines oder mehrerer Zeitgeber, wenn die Station (1000) im RRC-Verbindungsmodus ist; und
bedingtes Durchführen von Zugangssperrung im RRC-Verbindungsmodus, wobei die Bedingung für das Durchführen der Zugangssperrung einen Ablauf mindestens eines des einen oder der mehreren Zeitgeber umfasst, und der mindestens eine des einen oder der mehreren Zeitgeber bei Herstellung des RRC-Verbindungsmodus mit dem RAN (1100) initiiert wird.

16. Vorrichtung nach Anspruch 15, die ferner zum Ausführen oder Initiieren der Schritte nach einem der Ansprüche 2 bis 12 konfiguriert ist.

## Revendications

1. Procédé (200) d'interdiction d'accès d'une station (1000) dans un mode connecté de commande de ressources radio, RRC, à un réseau d'accès radio, RAN (1100), le procédé comprenant les étapes suivantes :
le maintien (202) d'une ou plusieurs minuteries lorsque la station (1000) est dans le mode connecté RRC ; et
la réalisation conditionnelle (204) d'une interdiction d'accès dans le mode connecté RRC, dans lequel la condition de réalisation de l'interdiction d'accès inclut l'expiration d'au moins l'une des une ou plusieurs minuteries, et l'au moins une des une ou plusieurs minuteries est lancée à l'établissement du mode connecté RRC avec le RAN (1100).

2. Procédé selon la revendication 1, dans lequel au moins une autre des minuteries est lancée à l'expiration d'une avance temporelle pour une synchronisation de liaison montante avec le RAN (1100).

3. Procédé selon la revendication 1 ou 2, comprenant en outre l'étape de la réception d'informations de configuration (1102) en provenance du RAN (1100), les informations de configuration (1102) étant indicatives d'une durée d'au moins l'une des une ou plusieurs minuteries.

4. Procédé selon l'une quelconque des revendications 1 à 3, dans lequel au moins l'une des une ou plusieurs minuteries compte des cycles d'une réception discontinue étendue, eDRX.

5. Procédé selon l'une quelconque des revendications 1 à 4, dans lequel au moins l'une des une ou plusieurs minuteries inclut une minuterie d'inactivité qui déclenche une réception discontinue étendue, eDRX.

6. Procédé selon l'une quelconque des revendications 1 à 5, dans lequel l'interdiction d'accès est réalisée en fonction de paramètres d'interdiction d'accès pour le mode connecté RRC.

7. Procédé selon la revendication 6, dans lequel les paramètres d'interdiction d'accès pour le mode connecté RRC incluent au moins l'un d'un temps d'interdiction, d'un facteur d'interdiction et d'un bitmap d'interdiction.

8. Procédé selon la revendication 6 ou 7, dans lequel la réalisation conditionnelle (204) de l'interdiction d'accès inclut en outre :
l'évaluation d'une condition pour l'interdiction d'accès dans le mode connecté RRC en fonction des paramètres d'interdiction d'accès pour le mode connecté RRC ; et
l'utilisation sélective d'une ressource (1104) du RAN (1100) en fonction d'un résultat de l'évaluation.

9. Procédé selon la revendication 8, dans lequel la ressource (1104) du RAN (1100) concerne un trafic de données provenant de la station (1000).

10. Procédé selon l'une quelconque des revendications 1 à 9, dans lequel la réalisation conditionnelle (204) de l'interdiction d'accès est déclenchée par au moins l'une d'une demande de programmation de la station (1000) et de données à transmettre à la station (1000).

11. Procédé selon l'une quelconque des revendications 1 à 10, dans lequel la réalisation conditionnelle (204) de l'interdiction d'accès est déclenchée avant la transmission d'une demande de programmation et/ou avant la transmission sur une ressource radio (1104) qui est programmée de manière semi-persistante et/ou avant la transmission sur un PUCCH dans le mode connecté RRC et/ou avant la réalisation d'une procédure d'accès aléatoire dans le mode connecté RRC.

12. Procédé selon l'une quelconque des revendications 1 à 11, dans lequel la réalisation conditionnelle (204) de l'interdiction d'accès est déclenchée par une réception discontinue étendue, eDRX, de la station (1000).

13. Produit de programme informatique comprenant des portions de code de programme pour réaliser les étapes selon l'une quelconque des revendications 1 à 12 lorsque le produit de programme informatique est exécuté sur un ou plusieurs dispositifs informatiques (1004).

14. Produit de programme informatique selon la revendication 13, stocké sur un support d'enregistrement lisible par ordinateur (1006).

15. Dispositif (100) d'interdiction d'accès d'une station (1000) dans un mode connecté de commande de ressources radio, RRC, à un réseau d'accès radio, RAN (1100), le dispositif étant configuré pour réaliser les étapes de :
le maintien d'une ou plusieurs minuteries lorsque la station (1000) est dans le mode connecté RRC ; et
la réalisation conditionnelle d'une interdiction d'accès dans le mode connecté RRC, dans lequel la condition de réalisation de l'interdiction d'accès inclut l'expiration d'au moins l'une des une ou plusieurs minuteries, et l'au moins une des une ou plusieurs minuteries est lancée à l'établissement du mode connecté RRC avec le RAN (1100).

16. Dispositif selon la revendication 15, configuré en outre pour réaliser ou lancer les étapes selon l'une quelconque des revendications 2 à 12.
